# EUROPEAN PATENT APPLICATION

(11) **EP 2 549 427 A1**
(43) Date of publication of application: **23.01.2013**
(21) Application number: 12176152.2
(22) Date of filing: 12.07.2012
(51) Int. Cl.: G06Q 30/02, G06Q 30/06

(54) **Scan my mail postal mail to electronic communication connection**

(30) Priority: 20.07.2011 US 201161572712 P
(71) Applicant: Bull HN Information Systems Inc., Phoenix, AZ 85029-1348 (US)
(72) Inventor: Cannon, Patrick Jerald, La Crosse, WI 54601 (US); Schultz, Paul Hermann, La Crosse, WI 54601 (US); Coleman, David Lawrence, Sparta, WI 54656-3708 (US); Kiani, Shahrom, Onalaska, WI 54650 (US); Kiani, Christina Dahling, Onalaska, WI 54650 (US); Macia, Carlos, La Crescent, MN 55947 (US); Guenthner, Russell W., Glendale, AZ 85306 (US); Bowne, David Lowell, La Crosse, WI 54601 (US)
(74) Representative: Lang, Johannes

(57) **Abstract**

A method, system and program product for managing mail items includes the steps of the recipient taking a photograph of the outside of the mail item that includes the recipient and sender address blocks using a personal mobile intelligent communication device such as an iPhone or Android phone (trademarked names), decoding a postal barcode such as an Intelligent Mail Barcode, found in vicinity or within an area of the sender address block in the photograph of the mail item to identify the sender and the recipient of the mail, transmitting the photograph and/or any decoded information to a server, processing the photograph and the decoded information on the server, transmitting the processed information from the server to the information technology (IT) system of the sender of the mail item, receiving information from the sender's IT system and, in some cases, processing the information received and then transmitting information derived from the received data from the sender's IT system back to the recipients mobile intelligent communication device for any further action.

## Description

### ABSTRACT OF THE DISCLOSURE

A method, system and program product for managing mail items includes the steps of the recipient taking a photograph of the outside of the mail item that includes the recipient and sender address blocks using a personal mobile intelligent communication device such as an iPhone or Android phone (trademarked names), decoding a postal barcode such as an Intelligent Mail Barcode, found in vicinity or within an area of the sender address block in the photograph of the mail item to identify the sender and the recipient of the mail, transmitting the photograph and/or any decoded information to a server, processing the photograph and the decoded information on the server, transmitting the processed information from the server to the information technology (IT) system of the sender of the mail item, receiving information from the sender's IT system and, in some cases, processing the information received and then transmitting information derived from the received data from the sender's IT system back to the recipients mobile intelligent communication device for any further action.

### BACKGROUND OF THE INVENTION

The present invention relates generally to mail processing, and more particularly to a method, system and program product for managing mail pieces using a personal mobile intelligent communication device such as an iPhone or an Android for automatically identifying the sender and the recipient of the mail item and transmitting this information along with or included in a photograph of the mail item to a server for further processing and then subsequently forwarding relevant information to the sender of the mail item and, in some cases, receiving in return information from the sender destined for the recipient of the mail item.

The mailing industry has recently launched initiatives designed to increase the value of traditional mail and to build awareness around integrating mobile technology into traditional mail communications. Many businesses mail thousands or even millions of pieces of mail each month to customers, clients, and prospects. Such businesses include, for example, insurance companies, mortgages and finance companies, bulk mail advertisers, credit card companies, and charitable organizations. It is therefore no surprise that most people typically find several pieces of mail in their mailbox each day.

Managing the mail has traditionally been a manual task that consists of opening each envelope and inspecting or reading its content to determine if any action should be taken. Unfortunately, many envelopes, especially those from bulk mailers, go unopened directly into a trash can or into a recycling bin. Furthermore, even some mail pieces that are actually opened can soon become forgotten, and even though an individual may intend to send a charitable contribution, take advantage of an offer or order a magazine those intentions may never be fulfilled because the opened mail piece ends up at the bottom of some paper stack.

Accordingly, a need exists for an improved method of managing mail items that overcomes certain limitations of more traditional approaches by using intelligent mobile technology to automate communication describing the mail item back to the sender of the mail item, thus providing an improvement over traditional mail systems. It is to the provision of such a method and system that the present invention is primarily directed.

### BRIEF SUMMARY OF THE INVENTION

Successful performance of the invention as described herein depends upon the recipients using a personal intelligent mobile communication device such as an iPhone or Android to take a good quality photograph of the mail piece. In general terms this means that: (1) the photograph includes both the recipient and the sender address block areas, (2) the photograph is not out of focus, (3) the photograph is taken in an adequately lit area, (4) the photograph does not suffer from excessive light reflection, skew or trapezoid effects and (5) the Intelligent Mail Barcode (or other barcode) is visible and not cut off. The personal mobile intelligent communication device includes a processing capability to run an application program, to take a picture or to utilize a camera capability to capture an image, and to initiate and receive phone calls, emails, and text messages. The intelligent communications device includes the capability for being connected to the internet via either cell-phone or wireless LAN (local area network) technologies and via the internet connection to send and receive electronic communication between the personal communications device and a remote central server, the central server is also connected either directly or indirectly to the internet. The central server is not associated or "owned" by the recipient, and is remotely located from the location of the recipient.

In a first illustrated embodiment of the present invention, a sender sends a mail item via a mail service such as the United States Postal Service or Post Office to an individual mail item recipient. The individual mail item recipient receives the mail item, which is typically an envelope or package. The mail item typically includes on the outside of the package, a written sender address or sender identification, a written recipient name and address, and further includes on the envelope or package "bar code" type information in an area easily scanned or observable. The bar code information typically does not include in encoded form all of the written information on the package. The recipient of the mail is prompted or encouraged or asked to take a photograph of the single mail item using a mobile application program (app) installed on the personal intelligent mobile communication device. The mobile application program processes the photograph in order to decode one or more postal barcodes such as the Intelligent Mail Barcode (IMB), POSTNET or PLANET if one or more are found on the mail item. The decoded data may include information about the sender and the recipient of the mail item. The image and the decoded information, when available, are transmitted by the intelligent mobile communication device to a server for further processing. The server can transmit the image to a video coding or optical character recognition application to fill in the sender's or recipient's information if they are missing. The server can receive back from the video coding or optical character recognition application the missing sender's or recipient's information. The server may also act as a gateway between the intelligent mobile communication device of the individual mail item recipients and the information technology (IT) systems of the mail senders transmitting information back and forth as required for a particular application.

In certain illustrated embodiments of the present invention, the taking of a photograph by the recipient of the mail item, that is, with the recipient using his or her own personal mobile communications device, is intended as providing a specific advantage in practice of the present invention. A recipient's own cell phone device, in today's world, is typically very handy, and almost all cell phones today include a camera capability that allows for taking a picture, typically today that picture being of quality adequate for allowing recognition of a bar code and further of quality adequate for recognition of other mailing address or return address information from a photograph of the face of the mail item.

The approach of taking a photograph provides advantages in certain embodiments of this present invention in comparison to asking a mail recipient to use a bar code scanner, or to possibly use application software on the cell phone which might provide for the cell phone optics to be used in the manner of a bar code scanner. Taking a photograph using a cell phone is a process well known to most cell phone users. A photograph of the mail item or a photograph of a selected portion of a mail item can be processed by software running on the cell phone, and / or the photograph can be emailed or transferred in electronic form to a central server. Taking a photograph does not require motion detecting algorithms or other requirements for recognizing a bar code which are well known to one knowledgeable in the state of the art for bar code scanners. The processing of the data in a photograph can also be more complex because it is not necessary to recognize the bar code in real time, as in a bar code scanner. It is also not required that the item or the cell phone be moving in order to recognize the bar code.

In a second exemplary illustrated embodiment, an individual mail item recipient receives a mail item from a large home improvement retailer and is asked to take a photograph of a mail piece using his or her own intelligent mobile communication device. The recipient for example may be requested to go to a particular website and download a particular application program (app) to participate in incentive based program offerings. An app installed on the device processes the image, decodes a postal barcode such as the Intelligent Mail Barcode (IMB), POSTNET or PLANET found on the mail piece and transmits the image and the decoded information to a server. The server, which may not be related to the large home improvement retailer, processes the received information, identifies the name of the large home improvement retailer and transmits the recipient's information to that retailer's IT system. The retailer's IT system transmits back to the server or directly to the recipient a coupon for the recipient. If sent to the server, the server, in turn, transmits the coupon information to the intelligent mobile communication device. The individual mail item recipient then may print the coupon or take the electronic coupon to the retail store to obtain the discount. The prospect of receiving such a coupon may thus be an inducement for the recipient to take the picture of the mail piece in the first place. The advantage to the retailer of this contact is that the retailer now knows the recipient has actually received and taken notice of the mail item, and might further note the date and time and other information about the recipient.

In broad terms, if the application is trusted by the recipient, the information sent to the server may include further personal preference information about the recipient retrieved from data stored on the phone or retrieved from other applications installed on the phone. This type of information about either a specific recipient or a broad group of recipients is well known to be valuable to retailers and others. Collecting such information about a large plurality of individual mail item recipients has potentially good value in marketing, sales or in building social or other databases.

In another or third exemplary embodiment, an individual mail item recipient receives a mail item in the form of a mail order catalog. He or she takes a photograph of the address label of the mail order catalog using their personal intelligent mobile communication device, which in this modern day is typically "handy". An app installed on the device processes the image, decodes any postal barcode such as the Intelligent Mail Barcode (IMB), POSTNET or PLANET found on the address label and transmits the image and the decoded information to the catalog retailer's IT system. The catalog retailer's IT system identifies the name and address of the recipient using the decoded information and transmits back to the mobile device a dialog prompting or encouraging the recipient to take a photograph of an item of interest in the catalog. After the recipient photographs the item of interest, the app on the device processes the image of the item, decodes any barcodes, watermarks, markings, or product codes associated with the item found on the image, and transmits the image and the decoded information to the catalog retailer's IT system. Once the IT system processes the data it transmits back to the intelligent mobile communication device a new dialog prompting the recipient to confirm the order. The app on the device sends back to the IT system the recipient's confirmation and the IT system finally transmits a receipt of the order to the intelligent mobile communication device.

In another or fourth illustrated embodiment, an individual mail item recipient is provided with or receives notice of an incentive to take a photograph of the address label, including any bar code, and further including any hand written or printed address information on the mail piece, and then requested in such notice to convey the photograph, or information derived from the photograph to a particular identified server, the server typically being owned and / or operated by a party that is not the recipient. The photograph is sent by the individual mail item recipient, possibly using a previously installed special app, to a central server. The server processes the photograph or the derived information entered either by hand or from decoding the bar code depicted in the photograph, determines the sender, and then sends information about the mail piece to the IT system of the sender. Then the sending of coupons, other "rewards", special offers, or further communication with the recipient can be initiated by the IT system of the sender. This embodiment provides a "forwarding service" that receives the photograph or derived information from a large plurality of recipients and the service determines the sender and forwards related information about the mail piece to the sender, typically under control of the IT department of the sender.

In another illustrated or fifth embodiment, a forwarding service utilizes a database for determining a sender based upon the sender-id in the bar code type information. This is an improvement that is useful when any bar code information does not provide complete sender address information, as for example with the United States Postal System (USPS) or any Postal Service or Post Office IMB (Intelligent Mail Barcode). The USPS IMB sender-id is simply a number assigned by the USPS and by itself is not directly indicative of the sender address. That is, it is just an assigned number not like a zip-code. By obtaining information describing the sender's address or identity beyond that which is provided in the sender-id field of an IMB, the forwarding service can build / accumulate / maintain a relationship between the sender-id number and the added information in a database that can be indexed by the sender-id field to provide for forwarding of other mail piece information based upon accessing the database using the number in the sender-id field. This concept is more readily understood if one realizes that the sender-id in the USPS IMB does NOT actually provide the identity of the sender in a form that is readily useful. The sender-id is just a number assigned by the USPS, and the relationship between a sender-id and a sender's address or identification may not be publicly or readily available.

In a further or sixth illustrated embodiment, a mail item is sent to an individual mail item recipient and the individual mail item recipient is encouraged / requested to take a photograph of the address area on the mail item. If it is not possible, or desirable that the photograph be processed and analyzed for detection of bar codes by an application on the mobile communications device, then as an alternative an application or the individual mail item recipient can send to a central server the photograph of the address area on the mail item. The decoding of any one or more bar codes can then be done with application software running on the central server, the software on the central server possibly being sophisticated enough to recognize bar codes that could not be decoded by the application software on the mobile communications device. The central server may further optionally employ recognition algorithms for determining the written addresses on the mail item. As an alternative, maybe a last resort, the photograph information could be examined visually by a person to see if the written addresses could be recognized.

In a seventh further illustrated embodiment of the present invention, an application program running on the mail recipient's cell phone, or personal communication device (such as iPad) provides for "registration" guidance during the taking of the photograph. That is, the application may provide guiding features in the "viewfinder" picture displayed on the cell phone during preparation for taking of the picture. The application software may optionally provide for processing during the picture taking preparation time which can inform the mail recipient whether the IMB information is being recognized, and to provide feedback as to whether further address information is clearly visible in the photograph, whether lighting is adequate, and whether the focus of the camera is adjusted correctly. Advice to the picture taking the picture can suggest use of flash to improve lighting. The application software might optionally suggest that two or more photographs may be required to provide for better recognition of the bar code or further mail address information.

### NEED, ADVANTAGES, AND ILLUSTRATED EMBODIMENTS OF THE PRESENT INVENTION

An advantage of the invention is to improve the value of physical mail so that more physical mail is used.

Another illustrated embodiment of the present invention provides advantages for improved interaction between physical communication (such as mail) and electronic communication by the recipient of the physical communication (mail) (such as text, chat, or email messages).

Another illustrated embodiment of the present invention provides for adding information to a database based upon information collected from inducing or encouraging individual physical mail recipients to interact electronically, over the internet, so as to increase the value of mail, typically to the sender, but also to the recipient of the mail.

Another illustrated embodiment of the present invention provides a method in which a step is to encourage or induce electronic communication by a recipient of a mail item, the communication increasing the usefulness of the mail item, or encouraging further interaction between the sender of the mail item, and the receiver of a mail item.

Another illustrated embodiment of the present invention provides a method in which a step is to encourage or induce ordering of goods or services electronically over the internet following reception of a mail item by an individual recipient, and to encourage electronic communication between the mail recipient and the sender, or a service related to the sender.

Another illustrated embodiment of the present invention provides a method to increase the ease of ordering goods or services from a sending company as described or promoted in a physical mail item, by inducing or encouraging electronic communication between the physical mail item recipient and the sending company.

Another illustrated embodiment of the present invention is to provide for a bill to be paid conveniently by invoking an application on the personal mobile communications device which allows a mail recipient to scan or photograph a bar code or identifying mark on the mail item, this action supplying a confirmation of intent to pay the bill, or to register the bill into a recipient database for tracking purposes, or for paying later.

Another illustrated embodiment of the present invention provides a method including steps for ordering from a catalog using the combination of IMB and product bar codes or IDs. This provides for time saving and potentially increased sales due to convenience and instantaneous gratification to the user.

Another illustrated embodiment of the present invention provides a method including steps for which include account verification or account creation. This step helps prevent someone from stealing a catalog and charging unwanted things to an account and providing a different shipping address.

Another illustrated embodiment of the present invention provides a method including steps for relating a specific cell phone to a mail recipient's account. This provides an advantage in that only a verified or registered cell phone which is known to belong to the mail recipient can be used to actually order things, or to invoke or purchase other goods or services which might be related to a physical mail item.

Another illustrated embodiment of the present invention provides a method including steps for sending a picture of the entire mail item back to the sender, and / or to the Post Office in order to provide indication of the condition of the package when it was received.

Another illustrated embodiment of the present invention provides a method including steps for an advertiser to mail a lightweight mail item such as a post card, and then scanning the IMB or other code will provide a link on the personal mobile communications device to a more complete or "full" catalog. This allows a mail item to be sent out less expensively (as a post card), while still providing for the mail recipient to gain access to a complete catalog.

Another illustrated embodiment of the present invention provides a method including steps for scanning a bar code placed on the label that instantaneous or spot feedback to the seller of an item.

Another illustrated embodiment of the present invention provides a method including steps for initiating a dialog or to request information from a mail recipient about when to deliver a package that requires signature. This applies to all couriers. A card or attachment is included or fastened to the mail item that can be torn off by the courier and left at the door, and then is scanned by the mail recipient during use of an application on the personal mobile communications device that requests the mail recipient to provide further information to help allow for delivery of the package at a convenient time. The communications device application can be programmed to enable the mail recipient to also decline delivery. Electronic communication between the mail recipient and a mail courier is initiated based upon scanning of a bar code, the bar code including enough information to allow a central server to forward an electronic message to a related party.

The benefits of establishing a verifiable association between a mail item, the receipt of a mail item, and electronic communication establishing a link between a mail recipient and the sender are illustrated in the following table. The table sets forth a range of services based upon establishing the electronic connection between a physical mail sender, and a mail recipient.

| **Background / Facts** | **Types of Mail** | **Service Provided for the recipient** | **Service Provided for the mailer** | **Incentives for the recipient to scan** | **USPS** |
|---|---|---|---|---|---|
| USA Population: 300M | Bills (utilities, credit cards, mortgages, etc.) | 1. Keep track of incoming mail and organize / generate reports | 1. Real-time notice of mail receipt by recipient | 1. tracking, organizing, reminding, reporting | 1. Positive proof of receipt of mail at the destination |
| Number of household's: 130M | Non-profit / donations | 2. For bills: determine the due amount and date, put in calendar, provide reminders, optionally invoke their bill-pay application to enter the payment info | 2. on-line collection of donations | 2. simplify bill payments | 2. Can market the data back to the large mailers |
| Number of firms (non-farm): 7.5M | Solicitations (Credit Cards, Other offers) | 3. For donations request: determine the requester, the last time and YTD paid and how much, provide a summary synopsis of the request | 3. streamli ne recordin g of events / integrati on of electronic data into their IT | 3. inform the solicitor of the desire to stop mailing and/or send the next mail at a different time (e.g. try me again in 1,3, 6, 12 months) | 3. Other potential mobile programs for the recipients using a unique bar code (e.g. buying stamps, pickup mail, etc.) |
| Average mail items received/house hold/day: 4 | Catalogues | 4. For credit card solicitations: provide a synopsis of the offer (line of credit, APR's, etc.), the last time received mail from the same mailer, etc. | 4. | 4. Enter in sweepstake Each unique scan increases the chance of winning. | 4. Provide a service to the recipients to enter their address / an assigned ID to track and see what mail is coming to them and when (maybe even see an image of the front of the mail piece) |
| Average mail pieces delivered /day by the USPS: 584M | Packages | 5. For catalogues: provide a synopsis of the offers, discounts, coupon, etc.; provide an electronic coupon with a barcode to be usable at stores; provide reminders as to the expiration of the coupon | 5. | 5. | 5. |
| | Corresponde nce | 6. for Packages | 6. | 6. | 6. |
| *USPS Intelligent Mail Barcode (IMB) facts:* | | 7. Correspondence: reminder in the calendar to respond back to Grandma, etc. | 7. | 7. | 7. |
| IMB: 65 bars/31 digits | | 8. Scan the catalog barcode. Enter the item number. Publish a Christmas wish list. Get a link to the catalog and item emailed to your mother. | 8. | 8. | 8. |
| IMB: 2 digit barcode id (OEL, Scheme, etc.) | | 9. | 9. | 9. | 9. |
| IMB: 3 digit service type (1st class, periodicals, etc.) | | 10. | 10. | 10. | 10. |
| IMB: 6 or 9 digits mailer Identifier | IMB: 6 or 9 digits sequence # | 11 digit routing postal code | | | |

### BRIEF DESCRIPTION OF THE SEVERAL VIEWS OF THE DRAWINGS

The invention is better understood by reading the detailed description of the invention in conjunction with the accompanying drawings.
FIG. 1 illustrates the high level processing operational flow for managing mail pieces.
FIG. 2 illustrates the processing logic performed at the intelligent mobile communication device.
FIG. 3 illustrates the processing logic sequence of operations performed at the server.
FIG. 4 illustrates the processing logic sequence of operations performed at the sender's IT system.
FIG. 5 illustrates the processing logic sequence of operations performed when the mail piece is a mail order catalog

### DETAILED DESCRIPTION OF THE ILLUSTRATIVE EMBODIMENTS OF THE INVENTION

The present invention according to an illustrated embodiment is directed to an improved method and system for managing mail items that overcomes the limitations of traditional approaches used in managing mail items. The method or methodology is offered to individual mail item recipients through a mobile application program (app) downloaded onto an intelligent mobile communication device such as an iPhone or Android. The app is particularly applicable to managing mail received from high volume (bulk) mail senders such as credit card companies or charitable organizations, but is also applicable for managing mail received from any business mail sender. The methodology of the process or method is described as follows.

The outside address area of each mail piece is photographed using the built-in camera included in an intelligent mobile communication device in a well-lit environment. It is preferred that the photograph contain both the destination and return addresses and if any postal barcode such as the Intelligent Mail Barcode (IMB), POSTNET or PLANET that are present on the mail piece and that these barcodes should be visible and not cut off on the photograph. The user starts the app that provides positional guidance with the aid of a rectangular frame that is colored as for example, in red while the camera is initially being positioned over the mail piece. The frame eventually turns a second color such as green when an acceptable position is detected by the device. The app uses the device's internal gyroscope to measure and detect an acceptable position. Once the frame becomes green the user pushes a button on the device to take the photograph of the outside address area of the mail item. After the photograph is taken, the app processes the photograph and makes it ready for transmission over the air (OTA) or via a Wi-Fi connection. The app also includes circuitry that attempts to detect any postal barcode such as the IMB, POSTNET or PLANET present on the mail piece. If a barcode is detected, it is decoded and the decoded information is presented to the mail recipient or user. The app then transmits the image and all decoded information to a remotely located server.

Once the server receives the image and the decoded information, it attempts to identify the sender and the recipient of the mail piece. If the sender or the recipient cannot be identified using the decoded information received from the intelligent mobile communication device the server transmits the image to a video coding or optical character recognition (OCR) application where an operator (video coder) or OCR software module fills in the missing information. The video coder or OCR application sends back to the server the information that the operator or OCR software module has completed. Once the server has assembled/obtained all the information required to properly identify the sender and the recipient, the data, and in some cases the image as well, are transmitted to the information technology (IT) system of the sender.

The sender's IT system processes the received information and determines if any additional information needs to be sent back to the recipient at this time or at a later date. When data needs to be sent to the recipient, the IT system transmits this data to the server or directly to the intelligent mobile communication device. When the server acts as a gateway between senders and recipients it transmits the data provided by the sender to the intelligent mobile communication device of the mail recipient. The type of data that a sender transmits to a mobile device may include a report or historical information, a bill due amount and date, a discount coupon, a commercial offer or solicitation, a charitable donation solicitation, a reminder, a confirmation, a dialog requesting additional input from the individual mail item recipient, etc.

### Description of High Level Processing Flow

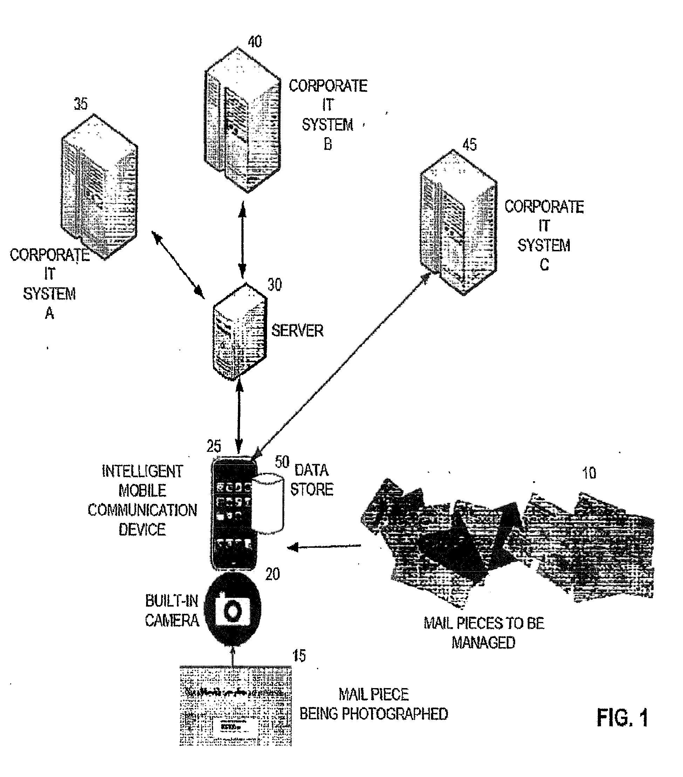

Referring to FIG. 1, the processing flow will now be described. As shown, a collection of mail pieces **10** are managed by photographing each mail piece **15** using the built-in camera **20** of an intelligent mobile communication device **25.** The device **25** attempts to read and decode any postal barcode information present on the image and may compress the image. The image and the decoded information are transmitted by device 25 over the air (OTA) or via Wi-Fi connection to a gateway server **30** or to a corporate IT system **45.** If a gateway server **30** is used, the server processes the data received from the intelligent mobile communication device **25** and in some cases it transmits data to a corporate IT system **35, 40.** The corporate IT systems **35, 40, 45** process the data received from the gateway server **30** or directly from the intelligent mobile communication device **25** and in some cases the IT systems return data back to the gateway server **30** or directly to the mobile device **25.**

The mobile application (app) uses a local data store **50** included in device 25, such as a database, to keep track of mail piece information decoded by the app such as sender information and recipient information as well as mail piece information received from the gateway server **30** or from the corporate IT system **35, 40, 45** such as sender information, recipient information, bill due dates, subscription renewal dates, commercial offers, placed commercial orders, charitable organization offers, and placed charitable donations. The app generates reports organized under a variety of different categories such as sender, recipient, mail piece type, transaction type, time/date, and action required.

### Description of Device Performed Processing Logic

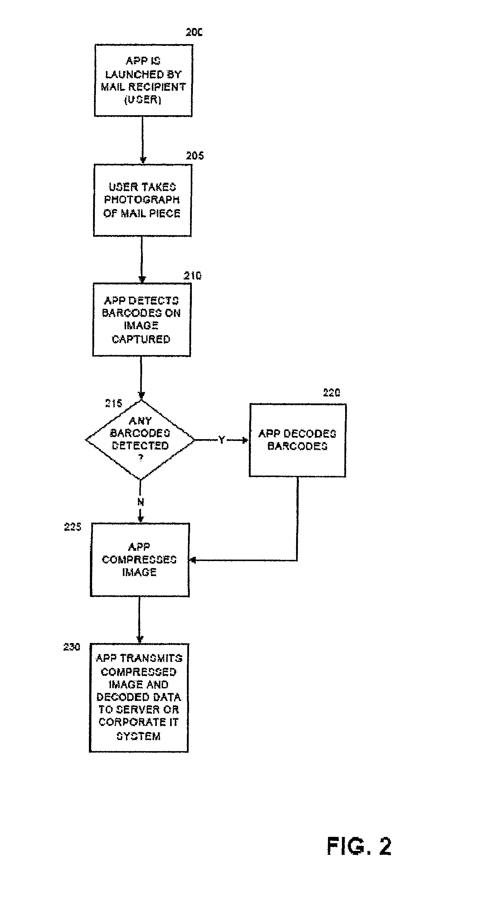

FIG. 2 is a flow chart that illustrates the processing logic performed in conjunction with the intelligent mobile communication device **25.** As indicated in block **200,** the individual mail item recipient launches a mobile application (app) to take a photograph of the mail piece (i.e. block **205).** As indicated in block **210,** the app processes the image to detect if any postal barcode such as IMB, POSTNET or PLANET are present on the mail piece (i.e. block **215).** If a barcode is detected the app decodes the information contained within the barcode as indicated in block **220.** Once the barcodes are decoded the image may be compressed as indicated in block **225** before transmitting it over the air (OTA) or via Wi-Fi to a server **30** or to a corporate IT system **35, 40, 45** as indicated in block **230.**

### .Description of Server Performed Processing Logic

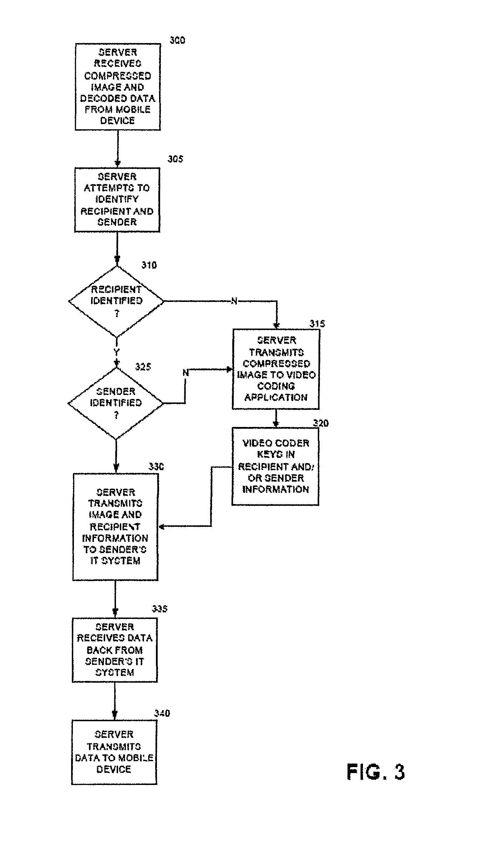

FIG. 3 illustrates the processing logic performed at the server **30.** As indicated in block **300,** the server **30** receives the image and the decoded data from the intelligent mobile communication device **25.** The server attempts to identify who the recipient and the sender are as indicated in block **305.** If the recipient cannot be identified (i.e. block **310)** or the sender cannot be identified (i.e. block **325)** from the decoded data received, the image is transmitted to a video coder or optical character recognition (OCR) application as indicated in block **315** where a video coder or OCR software module fills in the missing information (i.e. block **320).** Once the recipient and the sender are identified by server **30,** the image and the recipient information are in some cases transmitted to the sender's IT system for further processing as indicated in block **330.** The server **30** in some cases receives data back from the sender's IT system intended for the recipient as shown in block **335.** The server **30** then sends data back to the intelligent mobile communication device as shown in block **340.**

### Description of Sender IT System Performed Processing Logic

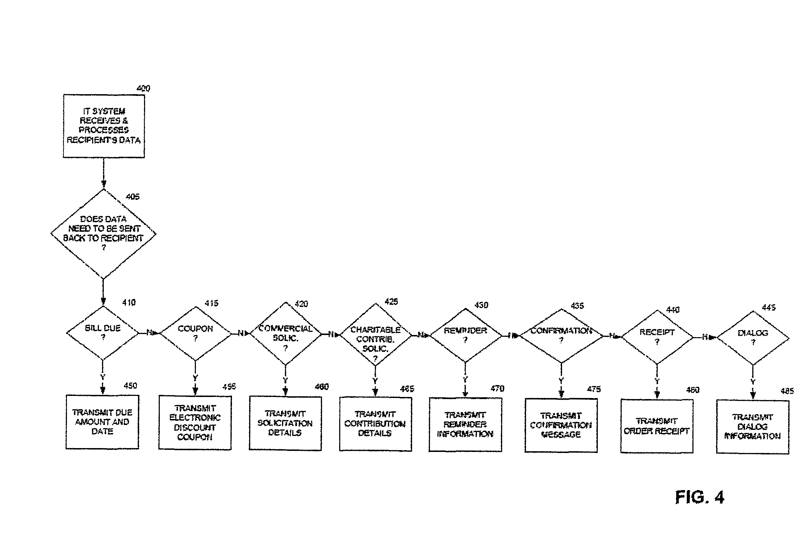

FIG. 4 illustrates the processing logic performed at the sender's IT system **35, 40, 45.** As indicated in block **400,** the sender's IT system processes the recipient's data received from the server **30** or from the intelligent mobile communication device **25.** The data received may include the image, the recipient's information, the sender's information and any other data processed by the server **30** or the mobile device **25.** As indicated in block **405,** the sender's IT system determines if data needs to be sent back to the mobile device depending on the type of application, examples of which may include bills due (i.e. block **410),** distribution of discount coupons (i.e. block **415),** a commercial offer or solicitation (i.e. block **420),** a charitable contribution solicitation (i.e. block **425),** a reminder (i.e. block **430),** a confirmation (i.e. block **435),** a receipt (i.e. block **440),** or a dialog back to the recipient prompting for additional information (i.e. block **445).** If the specific application requires data to be sent back to the recipient, the sender's IT system transmits to the server or to the mobile device the appropriate data, examples of which may include due amount and date (i.e. block **450),** an electronic coupon (i.e. block **455),** commercial solicitation details (i.e. block **460),** charitable contribution details (i.e. block **465),** reminder information (i.e. block **470),** confirmation messages (i.e. block **475),** order receipts (i.e. block **480),** or dialog information (i.e. block **485).**

An application that includes the distribution of electronic coupons (i.e. block **415)** is intended to incentivize the individual mail item recipient to use the illustrated method of the present invention. The electronic coupon may consist of a barcode that a retailer can directly scan from the mobile communication device or may require the recipient to print the discount coupon.

An application that includes transmitting reminders (i.e. block **430)** by the sender is intended to help the individual mail item recipient track when certain actions such as mailing a payment or renew a subscription are due.

### Description of Mail Order Catalog Processing Logic

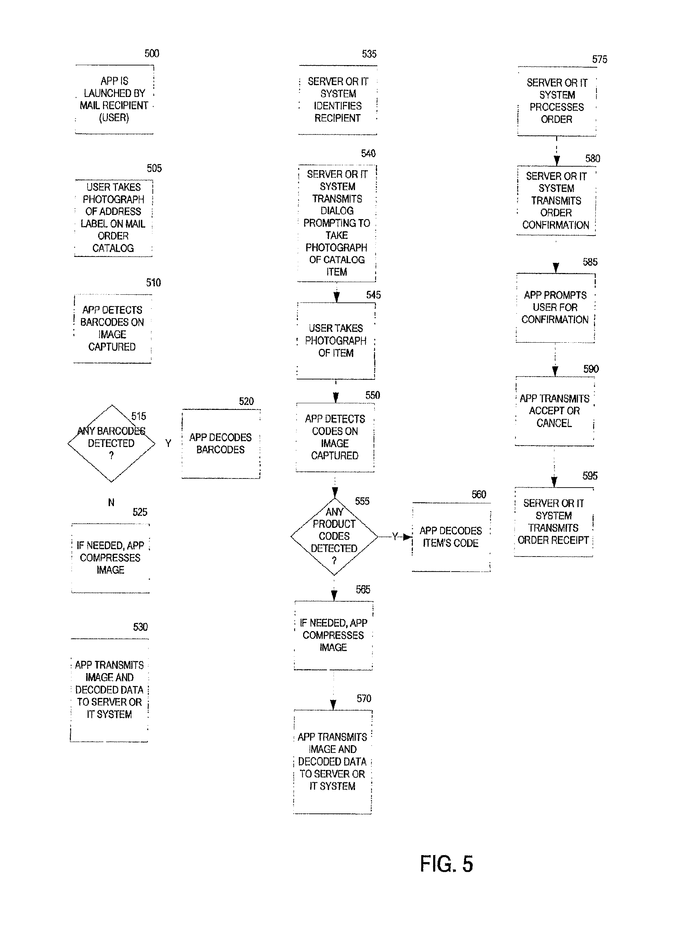

FIG. 5 illustrates the processing logic performed when the mail piece is a mail order catalog. As indicated in block **500,** the individual mail item recipient launches a mobile application (app) to take a photograph of the address label on the mail order catalog **505.** The app processes the image to detect in block **510** if any postal barcodes such as IMB, POSTNET or PLANET are present on the image. If a barcode is detected in block **515,** the app decodes the information contained within the barcode as indicated in block **520.** Once the barcodes are decoded the image may be compressed in block **525** before transmitting it to a server **30** or to the sender's corporate IT system **35, 40, 45** as indicated in block **530.** The server **30** or the IT system identifies the recipient as indicated in block **535** and transmits a dialog back to the app prompting the user to take a photograph of the catalog item as indicated in block **540.** After the user takes the photograph (i.e. block **545),** the app processes the image to detect in block **550** any barcode that may be associated with the item. If a barcode is detected in block **555,** the app decodes the information contained within the barcode (i.e. block **560),** may compress the image in block **565** and transmits the image and decoded data to the server or IT system as indicated in block **570.** The server **30** or IT system processes the item order received (i.e. block **575)** and transmits back to the app an order confirmation dialog as indicated in block **580.** The app prompts the user or mail recipient to confirm the order as indicated in block **585** and transmits the acceptance or cancellation to the server or IT system as indicated in block **590.** Finally, the server or IT system transmits to the app the order receipt as indicated in block **595.**

The transmission method between the intelligent mobile communication device and the server or corporate IT system may include electronic communication methods such as web based protocols and email. Other similar changes will be obvious to those skilled in the art.

## Claims

1. A method of collecting data from processing a number of mail items, the mail items each including a Scannable Postal Routing Code such as a United States Post Office Intelligent Mail Barcode (IMB), each mail item received by an individual mail item recipient, the method comprising the steps of:
a) providing to the individual mail item recipient notice of an incentive to utilize a personal mobile intelligent communications device such as an iPhone, iPad, or Android device to take one or more digital snapshots of at least a portion of the mail item, the portion including at least the Scannable Postal Routing Code, the Scannable Postal Routing Code including a Mailer Identification Number assigned by a Postal Service facility;
b) including on the personal mobile intelligent communications device, an application that provides for the individual mail item recipient to further utilize the mobile intelligent communications device to electronically transmit the Mailer Identification Number to a central server, that Mailer Identification Number contained in encoded form within at least a portion of the digital snapshot of the Scannable Postal Routing Code, or decoded by processing on the mobile intelligent communications device of the one or more digital snapshots of the Scannable Postal Routing Code;
c) further providing for utilizing the mobile intelligent communications device to electronically transmit Related Further Sender Identification Information not included in the Scannable Postal Routing Code, that Related Further Sender Identification Information providing additional information useful for more completely identifying the sender of the mail item;
d) providing for the receiving at the central server the Mailer Identification Number and the Related Further Sender Identification Information transmitted by the mobile device; and,
e) entering both the Mailer Identification Number and at least a portion of the Related Further Sender Identification Information into a database in a manner that results in the building of a table of relationships(s) between a plurality of the Mailer Identification Numbers and their Related Further Sender Identification Information in the database.

2. The method of Claim 1 wherein the mobile device prompts the mail recipient to obtain the Related Further Sender Identification Information from the individual mail item recipient's own visual observation of the mail item and enter the information into the mobile communications device.

3. The method of Claim 1 wherein the Related Further Sender Identification Information is obtained by the mobile communications device from processing of the digital snapshot in an area located beyond the area of the Scannable Postal Routing Code.

4. The method of Claim 1 wherein the Related Further Sender Identification Information is contained in the one or more digital snapshots in an area located beyond the area of the Scannable Postal Routing Code.

5. A method of collecting data from processing a number of mail items, the mail items each including a visible Written Sender Address (in either printed or hand-written form), and a visible Encoded Scannable Postal Routing Code such as a United States Post Office Intelligent Mail Barcode (IMB), each mail item received by an individual mail item recipient, the method comprising the steps of:
a) the individual mail item recipient activating a personal mobile intelligent communications device such as an iPhone, iPad, or Android device to take a photograph of each mail item's Written Sender Address and the Encoded Scannable Postal Routing Code;
b) the device processing the photograph and decoding the Encoded Scannable Postal Routing Code to obtain Postal Routing Code Content comprising at least:
i) a Mailer Identification Number of the mail item, and
ii) a Recipient Sequence number of the mail item, or a Delivery Point ZIP code of the mail item;
c) the device transferring electronically the Scannable Postal Routing Code Content to a receiving centrally located server;
d) receiving at the receiving centrally located server the Scannable Postal Routing Code Content;
e) processing the Scannable Postal Routing Code Content and formulating Mail Item Data and,
f) storing the Mail Item Data for the number of the mail items into a database on the receiving central server or into a database on a second central server.

6. The method of Claim 5, further comprising the step of:
utilizing the Mail Item Data for a number of identified senders to track incoming mail and to organize or generate reports descriptive of the incoming mail.

7. The method of Claim 5, further comprising the step of:
the centrally located server transferring electronically the information describing the identified recipient of the mail item to the sender to obtain a bill due amount and due date from a billing database.

8. The method of Claim 5, further comprising the step of:
transferring electronically, to the identified sender, information describing the identified recipient of the mail item, the recipient information then utilized to obtain information from a database about a donation request.

9. The method of Claim 5, further comprising the step of:
the server transferring electronically the information describing the identified recipient of the mail item to the identified sender to obtain information about a commercial solicitation.

10. The method of Claim 5, further comprising the steps of:
the server transferring electronically the recipient identification to the sender to obtain discount coupons.

11. A method of managing a number of mail pieces comprising steps of:
a) using a mobile intelligent communications device such as an iPhone or Android to photograph each mail piece that includes the destination address, the return address and any one postal barcode on the mail piece;
b) the device decoding any one postal barcodes such as the Intelligent Mail Barcode (IMB), POSTNET or PLANET to determine an identified sender of the mail piece;
c) the device decoding any one postal barcodes such as the Intelligent Mail Barcode (IMB), POSTNET or PLANET to determine an identified recipient of the mail piece;
d) the device decoding any one postal barcodes such as the Intelligent Mail Barcode (IMB), POSTNET or PLANET to determine the recipient's address; and
f) the device transferring electronically to a remotely located server the photograph, the identified sender and the identified recipient information of the mail piece.

12. The method of Claim 1, further comprising the steps of:
using information describing a number of identified senders to keep track of incoming mail and to organize or generate reports descriptive of the incoming mail.

13. The method of Claim 1, further comprising the steps of:
transferring electronically the information describing the identified recipient of the mail item to the sender to obtain further information associated with the mail piece such as a billing account information.

14. The method of Claim 1, further comprising the steps of:
receiving electronically from the sender further information associated with the mail piece such as subscription account information.

15. The method of Claim 1, further comprising the steps of:
transferring electronically to the identified sender information describing the identified recipient of the mail item, the recipient information then being utilized to obtain information from a database about a charitable request.

16. The method of Claim 1, further comprising the step of:
transferring electronically the information describing the identified recipient of the mail item to the identified sender to obtain information pertaining to a commercial solicitation.

17. The method of Claim 1, further comprising the step of:
transferring electronically the recipient identification to the sender to obtain electronic discount coupons or rewards.
